# EUROPÄISCHE PATENTANMELDUNG

(11) **EP 3 409 404 A1**
(43) Veröffentlichungstag der Anmeldung: **05.12.2018**
(21) Anmeldenummer: 18157802.2
(22) Anmeldetag: 21.02.2018
(51) Int. Cl.: B23C 3/12

(54) **KANTENFRÄSMASCHINE**

(30) Priorität: 02.06.2017 DE 102017112234
(71) Anmelder: Metabowerke GmbH, 72622 Nürtingen (DE)
(72) Erfinder: Schmidberger-Brinek, Susanne, 72587 Römerstein (DE)
(74) Vertreter: Markfort, Iris-Anne Lucie

(57) **Zusammenfassung**

Die Erfindung betrifft eine Kantenfräsmaschine (10; 110) mit einstellbarer Fasenhöhe, umfassend ein Lagergehäuse (14, 32; 114, 132), eine angetriebene Fräseinheit (12; 112), die innerhalb des Lagergehäuses (14, 32; 114, 132) um eine Drehachse D drehbar gelagert ist, eine Führungsplatte (16; 116) zur Führung der Kantenfräsmaschine an einem zu bearbeitenden Werkstück, wobei die Führungsplatte (16; 116) axial unterhalb des Lagergehäuses (14, 32; 114, 132) angeordnet und zur Einstellung der Fasenhöhe relativ zu der Fräseinheit (12; 112) axial verstellbar ist, und eine Verstellvorrichtung (20; 120) zur einhändigen Verstellung der Führungsplatte (16; 116), wobei die Verstellvorrichtung (20; 120) eine Übersetzungsvorrichtung (22; 122) mit einem Übersetzungselement (24; 124) zur Übersetzung einer Drehbewegung der Führungsplatte (16; 116) um die Drehachse D in eine axiale Translationsbewegung der Führungsplatte (16; 116) umfasst, und wobei das Übersetzungselement (24; 124) drehfest mit der Führungsplatte (16; 116) verbunden ist. Die Verstellvorrichtung (20; 120) umfasst ferner eine Betätigungseinheit (26; 126) zur manuellen Betätigung durch den Anwender, welche am Außenumfang der Führungsplatte (16; 116) vorgesehen und dazu ausgebildet ist, eine manuelle Drehbewegung um die Drehachse D in die Führungsplatte (16; 116) einzuleiten, und einen Sicherungsmechanismus (28; 128) zur Sicherung der Führungsplatte (16; 116) gegen eine unerwünschte Drehbewegung um die Drehachse D.

## Beschreibung

Die Erfindung betrifft eine Kantenfräsmaschine mit einstellbarer Fasenhöhe.

Eine Kantenfräsmaschine aus dem Stand der Technik ist beispielsweise in der Europäischen Patentanmeldung EP 1 340 574 A2 beschrieben. Demgemäß umfasst diese Kantenfräsmaschine eine angetriebene Fräseinheit mit einem daran anbringbaren Fräswerkzeug, die innerhalb eines Lagergehäuses um eine Drehachse drehbar gelagert ist, eine Führungsplatte zur Führung der Kantenfräsmaschine an bzw. auf einem zu bearbeitenden Werkstück in der Art einer Maschinenauflage und eine Verstellvorrichtung, die eine Verstellung des Überstands des Fräswerkzeugs gegenüber der Maschinenauflage bzw. Führungsplatte ermöglicht.

Die Verstellvorrichtung umfasst eine Spannvorrichtung mit einem Handbetätigungshebel. Befindet sich Letzterer in einer Spannposition, kann eine vorgenommene gegenseitige Einstellung des Fräswerkzeugs sowie der Maschinenauflage gesichert werden. In einer gelösten Stellung des Handbetätigungshebels kann eine Verstellung der Beiden zueinander erfolgen. Somit ist es bei dieser aus dem Stand der Technik bekannten Lösung erforderlich, in einem ersten Schritt den Handbetätigungshebel zu lösen, um dann in einem zweiten Schritt die gewünschte Verstellung vorzunehmen. Danach muss erneut der Handbetätigungshebel betätigt werden, um die vorgenommene Verstellung zu sichern. Somit ist bei dieser aus dem Stand der Technik bekannten Lösung die Fasenhöhe vergleichsweise kompliziert und zeitaufwändig einzustellen. Insbesondere ist eine Verstellung nicht mit nur einer Hand möglich, da die vorgenommene Verstellung händisch, d.h. mit einer Hand gesichert werden muss, bis der Handbetätigungshebel mit der jeweils anderen Hand betätigt wurde, um die Sicherung der Verstellung zu übernehmen.

Eine weitere Lösung ist aus der Europäischen Patentschrift EP 1 984 139 B1 bekannt, die eine Kantenfräsmaschine beschreibt, bei der mit Hilfe einer vergleichsweise komplizierten Verstellvorrichtung eine Verstellung der Fasenhöhe ermöglicht wird. Diese aus dem Stand der Technik bekannte Lösung ermöglicht eine einhändige Bedienung der Verstellvorrichtung, ist jedoch in ihrem Aufbau und damit auch in der Montage vergleichsweise komplex und aufwändig.

Dem gegenüber besteht eine Aufgabe der vorliegenden Erfindung darin, eine zu den aus dem Stand der Technik bekannten Lösungen Alternative bereitzustellen, die den bekannten Vorteil einer einhändigen Bedienung bereitstellt.

Demgemäß schlägt die vorliegende Erfindung eine Kantenfräsmaschine mit den Merkmalen des Anspruchs 1 vor.

Auch bei dieser Lösung dient eine Verstellvorrichtung zur einhändigen Verstellung der Führungsplatte, wobei die Verstellvorrichtung eine Übersetzungsvorrichtung mit einem Übersetzungselement zur Übersetzung einer Drehbewegung der Führungsplatte um die Drehachse in eine axiale Translationsbewegung der Führungsplatte umfasst, und wobei das Übersetzungselement drehfest mit der Führungsplatte verbunden ist. Weiterhin ist vorgesehen, dass die Verstellvorrichtung eine Betätigungseinheit zur manuellen Betätigung durch den Anwender umfasst, welche am Außenumfang der Führungsplatte vorgesehen und dazu ausgebildet ist, eine manuelle Drehbewegung um die Drehachse in die Führungsplatte einzuleiten, und einen Sicherungsmechanismus zur Sicherung der Führungsplatte gegen eine unerwünschte Drehbewegung um die Drehachse.

Das Lagergehäuse kann erfindungsgemäß ein- oder mehrteilig ausgebildet sein. Zum Zweck einer besonders einfachen Montage kann das Lagergehäuse zwei Gehäuseteile umfassen, die drehfest miteinander verbunden sind, beispielsweise über eine Keilnutverbindung oder dergleichen. Das Lagergehäuse bildet unabhängig von seiner konkreten Gestaltung den feststehenden Teil der Kantenfräsmaschine gegenüber der darin drehbar gelagerten angetriebenen Fräseinheit.

Die Führungsplatte ist axial unterhalb (bezogen auf die Drehachse), d. h. auf der proximalen Seite des Lagergehäuses angeordnet und kann zur Einstellung der Fasenhöhe relativ zu der Fräseinheit axial verstellt werden. Hierzu wird die Führungsplatte vermittels der Betätigungseinheit um die Drehachse gedreht und mithilfe der Übersetzungsvorrichtung wird diese Drehbewegung in eine Translationsbewegung übersetzt. Die Betätigungseinheit bildet den Teil der Kantenfräsmaschine, den der Anwender manuell betätigt, wenn er die Fasenhöhe verstellen möchte.

Erfindungsgemäß ist die Betätigungseinheit am Außenumfang der Führungsplatte vorgesehen. Wie nachfolgend näher erläutert wird, kann die Betätigungseinheit integral mit der Führungsplatte ausgebildet sein oder wenigstens ein separat davon ausgebildetes Bauteil umfassen. Damit sichergestellt ist, dass ein unerwünschtes Verdrehen der Führungsplatte und damit eine unerwünschte Verstellung der Fasenhöhe im regulären Betrieb der Kantenfräsmaschine unterbleibt, ist zudem ein Sicherungsmechanismus vorgesehen, der die Führungsplatte in einer gewünschten Position hält und gegen eine unerwünschte Drehbewegung sichert.

Insbesondere kann der Sicherungsmechanismus einen Verstellring aufweisen, der relativ zu dem Lagergehäuse drehfest und zwischen einer Sicherungsposition und einer Freigabeposition axial verschiebbar angeordnet und dazu ausgebildet ist, in seiner Sicherungsposition eine drehfeste Verbindung mit der Führungsplatte herzustellen.

Die axiale Verschiebung des Verstellrings relativ zu dem Lagergehäuse erfolgt bezogen auf die Drehachse in axialer Richtung. Indem der Verstellring in seiner Sicherungsposition eine drehfeste Verbindung mit der Führungsplatte herstellt, wird die Führungsplatte auch drehfest zu dem Lagergehäuse gehalten.

Es kann weiterhin vorgesehen sein, dass der Sicherungsmechanismus ferner eine Rastanordnung aufweist, die erste Rastelemente umfasst, welche an der Führungsplatte oder an der Betätigungseinheit der Führungsplatte vorgesehen sind, sowie zweite Rastelemente, die an dem Verstellring vorgesehen sind, wobei die ersten und zweiten Rastelemente in der Sicherungsposition des Verstellrings derart in Eingriff miteinander stehen, dass eine drehfeste Verbindung des Verstellrings mit der Führungsplatte bewirkt und so eine unerwünschte Drehbewegung der Führungsplatte verhindert wird.

Bei dieser spezifischen Ausführungsform wird somit die Sicherung der Führungsplatte gegen ein unerwünschtes Verdrehen mithilfe von ersten und zweiten Rastelementen bewirkt. Diese stehen in der Sicherungsposition des Verstellrings derart in verrastendem Eingriff miteinander, dass eine Verdrehung der Führungsplatte relativ zu dem Verstellring (der seinerseits drehfest zu dem Lagergehäuse gehalten ist) verhindert wird.

Zusätzlich oder alternativ kann vorgesehen sein, dass der Sicherungsmechanismus ferner ein elastisches Element, insbesondere eine Feder umfasst, die derart angeordnet und ausgebildet ist, dass sie den Verstellring in Richtung seiner Sicherungsposition vorzuspannen vermag. Auf diese Weise verbleibt der Verstellring so lange in seiner Sicherungsposition, bis er aktiv durch einen Anwender aus dieser entgegen der Spannkraft des elastischen Elements bzw. der Federkraft in axialer Richtung verschoben wird, um eine Drehbewegung der Führungsplatte freizugeben.

Weiterhin kann, unabhängig von der spezifischen Ausgestaltung des Sicherungsmechanismus vorgesehen sein, dass das Lagergehäuse drehfest mit einem dieses teilweise übergreifenden äußeren Gewindering verbunden ist, der ein Innengewinde aufweist, das in Eingriff mit einem Außengewinde des Übersetzungselements steht, sodass eine Drehbewegung des Übersetzungselements um die Drehachse in eine axiale Translationsbewegung übersetzt werden kann. Somit bilden das Außengewinde des Übersetzungselements und das Innengewinde des äußeren Gewinderings gemeinsam die Übersetzungsvorrichtung zur Übersetzung einer Drehbewegung der Führungsplatte in eine axiale Translationsbewegung der Führungsplatte. Selbstverständlich ist es auch denkbar, dass ein entsprechendes Innengewinde in einem anderen Bauteil als dem äußeren Gewindering vorgesehen ist.

Gemäß einer Weiterbildung der Erfindung kann vorgesehen sein, dass der äußere Gewindering zumindest abschnittsweise an seinem Außenumfang eine Eingriffsstruktur, insbesondere wenigstens eine Nut, aufweist, in welche eine korrespondierende Eingriffsstruktur, insbesondere wenigstens ein Vorsprung, der von der Innenumfangsfläche des Verstellrings radial nach innen ragt, derart einzugreifen vermag, dass eine relative Drehbewegung des Verstellrings zum Lagergehäuse unterbunden werden kann.

Diese Lösung stellt eine denkbare Variante dar, die es ermöglicht, den Verstellring mit einem dazwischen geschalteten Bauteil, nämlich dem äußeren Gewindering, drehfest zum Lagergehäuse zu halten. Alternative Lösungen, die zugleich eine axiale Verstellbarkeit des Verstellrings relativ zum Lagergehäuse ermöglichen, sind selbstverständlich ebenfalls denkbar.

Unabhängig von der spezifischen Gestaltung des Sicherungsmechanismus und dem möglichen Vorsehen eines äußeren Gewinderings kann weiterhin vorgesehen sein, dass die Betätigungseinheit, wie bereits vorstehend angedeutet, integral mit der Führungsplatte ausgebildet ist und insbesondere eine Profilierung an der Außenumfangsfläche der Führungsplatte umfasst.

Alternativ hierzu ist es jedoch auch möglich, dass die Betätigungseinheit wenigstens ein separat von der Führungsplatte ausgebildetes radial verschiebbares Betätigungselement aufweist, das zwischen einer Drehstellung und einer Blockierstellung radial hin und her bewegt werden kann und insbesondere in jeder Stellung drehfest mit der Führungsplatte verbunden ist.

Bei der integralen Ausgestaltung, bei der die Betätigungseinheit Teil der Führungsplatte ist, ist eine denkbare Möglichkeit, dass diese durch eine Profilierung an der Außenumfangsfläche der Führungsplatte gebildet ist oder zumindest eine solche mitumfasst. Eine solche Profilierung kann jedoch auch dann vorgesehen sein, wenn ein separates Betätigungselement gemäß der zweiten Alternative vorgesehen ist. Bei der integralen Ausbildung kann die Profilierung beispielsweise dazu dienen, dass der Anwender auch mit beispielsweise ölverschmierten Fingern die Führungsplatte sicher greifen und wie gewünscht verdrehen kann, wenn er eine Verstellung der Fasenhöhe einleiten möchte.

Im Falle wenigstens eines separat ausgebildeten Betätigungselements kann die Profilierung auch mit diesem wenigstens einen Betätigungselement zusammenwirken, um zumindest in der Drehstellung eine über das Betätigungselement eingeleitete Drehbewegung auf die Führungsplatte zu übertragen. Dies ist insbesondere dann vorteilhaft, wenn das Betätigungselement nicht in jeder Stellung, sondern beispielsweise nur in der Drehstellung, drehfest mit der Führungsplatte verbunden ist.

Bei einer spezifischen Ausgestaltungsvariante kann jedoch vorgesehen sein, dass das Betätigungselement in jeder Stellung drehfest mit der Führungsplatte verbunden ist, wodurch sowohl eine Verdrehsicherung als auch eine Übertragung einer Drehbewegung über das Betätigungselement ermöglicht.

Weiterhin kann vorgesehen sein, dass das Betätigungselement in seiner Blockierstellung in drehfester Verbindung mit dem Verstellring steht.

Schließlich kann vorgesehen sein, dass die Betätigungseinheit ferner ein elastisches Element, insbesondere eine Feder, umfasst, die das Betätigungselement in Richtung seiner Blockierstellung vorspannt. Auf diese Weise soll wiederum sichergestellt sein, dass nur bei einer aktiven manuellen Betätigung durch einen Anwender das Betätigungselement aus seiner Blockierstellung verbracht werden kann, um eine Drehbewegung der Führungsplatte in diese einzuleiten und/oder zuzulassen.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Es zeigen schematisch:
- Figur 1: eine geschnittene Ansicht des werkzeugseitigen Teils einer erfindungsgemäßen Kantenfräsmaschine gemäß einer ersten Ausführungsform;
- Figur 2: den werkzeugseitigen Teil der erfindungsgemäßen Kantenfräsmaschine gemäß Figur 1 in ungeschnittener Seitenansicht;
- Figur 3: eine geschnittene Ansicht des werkzeugseitigen Teils einer erfindungsgemäßen Kantenfräsmaschine gemäß einer zweiten Ausführungsform; und
- Figur 4: den werkzeugseitigen Teil der erfindungsgemäßen Kantenfräsmaschine gemäß Figur 3 in ungeschnittener Seitenansicht.

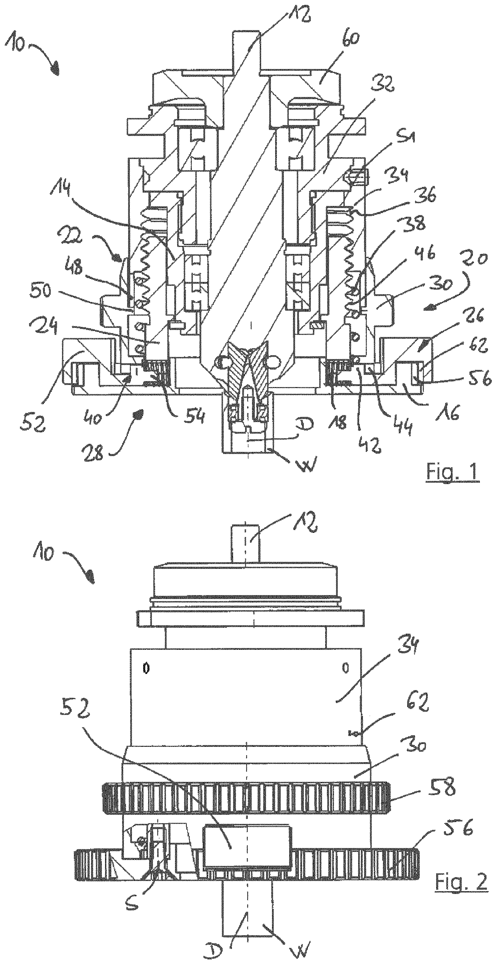

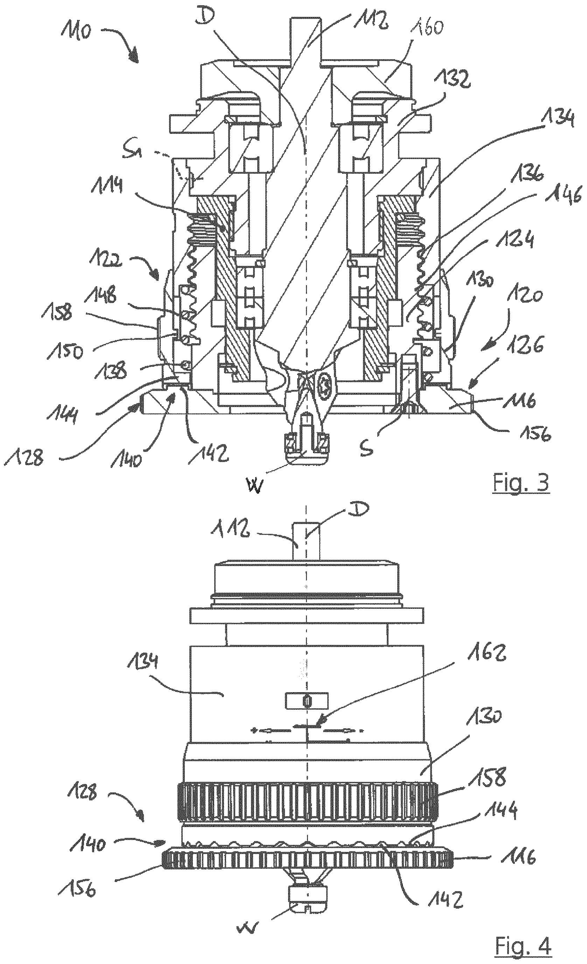

Die Figuren zeigen schematisch den vorderen Teil, d. h. den werkzeugseitigen Teil, einer Kantenfräsmaschine gemäß der vorliegenden Erfindung, wobei die Figuren 1 und 2 eine erste Ausführungsform, und die Figuren 3 und 4 eine zweite Ausführungsform darstellen. Demgemäß sind übereinstimmende Merkmale bzw. funktionsgleiche Merkmale, die jedoch strukturell unterschiedlich aufgebaut sein können, mit den gleichen Bezugszeichen versehen, wobei bei der zweiten Ausführungsform gemäß den Figuren 3 und 4 diesen noch die Ziffer "1" vorangestellt ist.

Allgemein ist die Kantenfräsmaschine bzw. der gezeigte Teil davon mit dem Bezugszeichen 10 bezeichnet. Diese umfasst eine angetriebene Fräseinheit 12, die an einem proximalen freien Ende eine Werkzeugaufnahme für ein Fräswerkzeug W aufweist (proximal bzw. distal ist dabei auf das Werkzeug bezogen). An ihrem distalen Ende kann sie in üblicher Weise in einem Maschinengrundkörper (nicht dargestellt) aufgenommen sein und mit Hilfe eines elektrischen Motors über ein Kegelrad oder dergleichen, das in Eingriff mit dem gezeigten, drehfest verbundenen Antriebsrad 60 der Fräseinheit 12 steht, angetrieben werden.

Die angetriebene Fräseinheit 12 ist um eine Drehachse D drehbar gelagert und stützt sich hierzu über übliche Wälzlageranordnungen an einem in der dargestellten Ausführungsform zweiteiligen Lagergehäuse ab, das ein inneres Lagergehäuse 14 und ein äußeres Lagergehäuse 32 umfasst. In der dargestellten Ausführungsform sind die beiden Lagergehäuseteile 14 und 32 drehfest miteinander verbunden, so dass diese sich nicht relativ zueinander verdrehen lassen. Weiterhin kann auch eine axiale Festlegung der Positionierung der beiden Gehäuseteile 14 und 32 vorgesehen sein, wie gezeigt. Grundsätzlich ist es auch denkbar ein einteiliges Lagergehäuse vorzusehen.

Wie in der Figur 1 und analog in der Figur 3 ebenfalls gut zu erkennen ist, umfasst die Kantenfräsmaschine 10 zudem eine Führungsplatte 16, die axial unterhalb, d. h. auf der proximalen Seite des Lagergehäuses 14, 32 angeordnet und zur Einstellung der Fasenhöhe relativ zu der Fräseinheit 12 axial verstellbar ist. Die Führungsplatte 16 dient in der Art einer Maschinenauflage zur Anlage oder Auflage auf einem zu bearbeitenden Werkstück, und der Überstand des Werkzeugs W in axialer Richtung über die dem Werkstück zugewandte Oberfläche der Führungsplatte 16 definiert die Fasenhöhe.

Zur Verstellung der Führungsplatte 16 ist eine Verstellvorrichtung 20 vorgesehen. Diese dient zur einhändigen Verstellung der Führungsplatte 16 relativ zu der Fräseinheit 12 und ermöglicht so eine schnelle und einfache Anpassung der Fasenhöhe und folglich eine unkomplizierte Handhabung der Kantenfräsmaschine 10 für einen Anwender. Dabei umfasst die Verstellvorrichtung 20 eine Übersetzungsvorrichtung 22 mit einem Übersetzungselement 24, das eine Drehbewegung der Führungsplatte 16 um die Drehachse D in eine axiale Translationsbewegung der Führungsplatte 16 entlang der Drehachse D umzuwandeln vermag.

Wie in der Figur 2 und analog in der Figur 3 zu erkennen ist, ist die Führungsplatte 16 mit Hilfe einer Schraubverbindung (angedeutet durch das Bezugszeichen S) drehfest mit dem Übersetzungselement 24 verbunden. Wird nun also die Führungsplatte 16 um die Drehachse D verdreht, nimmt diese das Übersetzungselement 24 entsprechend in seiner Drehbewegung mit. An der Außenseite des Übersetzungselements 24 ist ein Außengewinde 46 vorgesehen, das in Eingriff mit einem korrespondierenden Innengewinde 36 an einem Gewindering 34 steht. Der Gewindering 34, auch als äußerer Gewindering 34 bezeichnet, übergreift das Lagergehäuse 14, 32 abschnittsweise und ist ebenfalls mittels einer Schraubverbindung (angedeutet durch das Bezugszeichen S1 drehfest verbunden. Alternativ sind selbstverständlich auch andere Befestigungsmöglichkeiten, die eine drehfeste Verbindung des äußeren Gewinderings 34 mit dem Lagergehäuse (vorliegend dem Lagergehäuseteil 32) ermöglichen, denkbar.

Durch den Eingriff des Außengewindes 46 in das korrespondierende Innengewinde 36 des äußeren Gewinderings 34 erfolgt eine Übersetzung der Drehbewegung der Führungsplatte 16 in eine translatorische Bewegung der Führungsplatte 16 entlang der Drehachse D. Wird also das Übersetzungselement 24 in Folge einer Drehbewegung um die Drehachse D in den äußeren Gewindering 34 eingeschraubt, so verlagert sich die Führungsplatte 16 von dem proximalen freien Ende der angetriebenen Fräseinheit 12 weg (Vergrößerung der Fasenhöhe), während bei einer entgegengesetzten Drehbewegung, bei der das Übersetzungselement 24 aus dem äußeren Gewindering herausgeschraubt wird, eine Verlagerung der Führungsplatte 16 in Richtung zu dem proximalen Ende der angetriebenen Fräseinheit 12 erfolgt (Verringerung der Fasenhöhe).

Um zu verhindern, dass die Führungsplatte 16 unerwünscht, beispielsweise während des regulären Betriebs der Kantenfräsmaschine 10, verstellt wird, ist ferner ein Sicherungsmechanismus als Teil der Verstellvorrichtung 20 vorgesehen und allgemein mit dem Bezugszeichen 28 bezeichnet. Der Sicherungsmechanismus 28 umfasst einen Verstellring 30, der bezogen auf die Drehachse D axial zwischen einer Freigabeposition (nicht gezeigt) und einer Sicherungsposition (vgl. Figuren 1 und 3) verschiebbar angeordnet ist.

Hierzu weist der Verstellring 30 an seinem Innenumfang wenigstens einen radialen Vorsprung 50 auf, der in eine axial verlaufende Nut 48 an der Außenseite des äußeren Gewinderings 34 einzugreifen vermag. Dadurch dass der Vorsprung 50 in radialer Richtung innerhalb der Nut 48 nahezu spielfrei aufgenommen ist, wird eine Drehverbindung des Verstellrings 30 relativ zu dem äußeren Gewindering 34 und damit relativ zu dem Lagergehäuse 14, 32 verhindert. Zugleich kann der Verstellring 30 entlang der Nut 48 an der Außenseite des äußeren Gewinderings 34 verschoben werden, bis der Vorsprung 50 an einer der axialen Endschultern der Nut 48 anschlägt.

In seiner Sicherungsposition, die in den Figuren 1 und 3 gezeigt ist, dient eine Rastanordnung 40 als Teil des Sicherungsmechanismus 28 zur Sicherung der Position der Führungsplatte 16. Die Rastanordnung 40 umfasst hierzu erste Rastelemente 42, die an der Führungsplatte 116 selbst (vgl. Figur 3 Bezugszeichen 142) oder an einem zusätzlichen Betätigungselement 52 (vgl. Figur 1, Bezugszeichen 42) vorgesehen sind und in Eingriff mit korrespondierenden zweiten Rastelementen 44, 144 an dem Verstellring 30 stehen.

Wird nun in der ersten Ausführungsform der Figuren 1 und 2 der Verstellring 30 axial aus seiner Sicherungsposition in Richtung zu dem distalen Ende der angetriebenen Fräseinheit 12 verschoben, so gelangen die zweiten Rastelemente 44 außer Eingriff mit den ersten Rastelementen 42. Die Verdrehsicherung wird hierdurch gelöst. Alternativ ist es bei der ersten Ausführungsform der vorliegenden Erfindung jedoch auch möglich, die Verdrehsicherung dadurch zu lösen, dass zusätzlich vorgesehene Betätigungselemente 52 radial zur Drehachse D hin bewegt werden.

Gemäß der ersten Ausführungsform ist eine Betätigungseinheit 26 der Verstellvorrichtung zur manuellen Betätigung durch den Anwender durch wenigstens ein, in der gezeigten Ausführungsform der Figur 1 durch zwei Betätigungselemente 52 gebildet, welche am Außenumfang der Führungsplatte 16 angeordnet und radial zu dieser verschiebbar ausgebildet sind. Werden nun die Betätigungselemente 52 nach radial innen verschoben, so gelangen die daran ausgebildeten ersten Rastelemente 42 ebenfalls außer Eingriff mit den zweiten Rastelementen 44 des Verstellrings 30, wodurch in gleicher Weise die Sicherung der Führungsplatte 16 gegen eine Verdrehung entfällt.

Die Betätigungselemente 52 können zudem Rastvorsprünge 62 aufweisen, die radial nach innen weisen und dazu geeignet sind, mit einer Profilierung 56 an der Außenumfangsfläche der Führungsplatte 16 in Eingriff zu gelangen (vgl. Figur 1). Alternativ oder, wie in der Figur 1 gezeigt, zusätzlich, können die Betätigungselemente 52 über radiale Vorsprünge 54 verfügen, die mit einer entsprechenden Profilierung 18 am Innenumfang der Führungsplatte 16 in gleicher Weise zusammenwirken. Zudem kann die Profilierung 18 so ausgebildet sein, dass in jeder Position der Betätigungselemente 52 diese in drehfestem Eingriff mit der Führungsplatte 16 stehen.

Auf diese Weise wird gewährleistet, dass zumindest in der Betätigungsstellung der Betätigungselemente 52, d. h. wenn diese durch einen Anwender nach radial innen verlagert werden, über die Betätigungselemente 52 nicht nur eine Entsicherung des Sicherungsmechanismus 26 erfolgt, sondern auch eine eingeleitete Drehbewegung auf die Führungsplatte 16 übertragen werden kann. Dies ermöglicht eine einhändige Bedienung des Verstellvorrichtung 20 durch den Anwender. Zugleich sichern in der ersten Ausführungsform die Betätigungselemente 52 zusammen mit dem Verstellring 30 und der Rastanordnung 26 die Führungsplatte 16 zuverlässig gegen eine unerwünschte Drehbewegung relativ zu der angetriebenen Fräseinheit 12.

Im Unterschied zu der ersten Ausführungsform der Figuren 1 und 2 ist bei der zweiten Ausführungsform der Figuren 3 und 4 die Rastanordnung 140 etwas abweichend ausgebildet. Auch hier sind erste und zweite Rastelemente 142, 144 vorgesehen, wobei die ersten Rastelemente 142 an der Führungsplatte 116 selbst ausgebildet sind, während die zweiten Rastelemente 144 an dem Verstellring 130 vorgesehen sind. Wie bei der ersten Ausführungsform kann der Anwender aktiv den Verstellring 130 axial in Richtung des distalen Endes der angetriebenen Fräseinheit 112 verschieben und hierdurch die Sicherung der Führungsplatte 116 gegen ein unerwünschtes Verdrehen lösen.

Alternativ kann der Anwender jedoch auch zur einhändigen Betätigung unmittelbar an der durch die Außenprofilierung 156 der Führungsplatte 116 ausgebildeten Betätigungseinheit 126 angreifen und die Führungsplatte 116 gegen den Widerstand der Rastanordnung 140 verdrehen. Aufgrund der spezifischen Ausgestaltung der ersten und zweiten Rastelemente 142 und 144 (Neigungswinkel der Flanken der Rastelemente) und der axialen Verschiebbarkeit des Verstellrings 130 wird letzterer bei entsprechender Krafteinwirkung in radialer Richtung auf die Führungsplatte 116 verschoben und gibt Raste für Raste eine Drehbewegung frei.

In beiden Ausführungsformen ist der Verstellring 30 bzw. 130 durch eine Feder 38 in Richtung seiner sichernden Position vorgespannt. Die Verdrehkraft, die ein Anwender bei der Ausführungsform der Figuren 3 und 4 auf die Führungsplatte 116 aufzubringen hat, um die Sicherungswirkung der Rastanordnung 140 zu überwinden, muss dementsprechend auch so bemessen sein, dass eine Auslenkung des Verstellrings 130 entgegen der Federkraft der Feder 138 erreicht wird. Die Federkraft und der Neigungswinkel der Flanken der Rastelemente 142 und 144 kann dementsprechend auch aufeinander abgestimmt sein.

Die zweite Ausführungsform der vorliegenden Erfindung stellt somit eine besonders einfach zu bedienende und zugleich einfach aufgebaute Verstellvorrichtung 20 für eine Kantenfräsmaschine dar.

Bei beiden Ausführungsformen kann an beispielsweise dem äußeren Gewindering 34 eine Skala 62, 162 an der Außenumfangsfläche vorgesehen sein, die angibt, welche Fasenhöhe aktuell eingestellt ist. Zudem können selbstverständlich an dem proximalen Ende der angetriebenen Fräseinheit 12, 112 unterschiedlichste Fräswerkzeuge angebracht werden.

Schließlich ist zu erwähnen, dass der Verstellring 30, 130 in beiden Ausführungsformen an seiner Außenumfangsfläche ebenfalls eine Profilierung 58, 158 aufweisen kann, die einen verbesserten Griff durch den Anwender ermöglicht. Alternative Ausgestaltungen der Profilierung 58, 158, beispielweise in Form einer Rändelung oder dergleichen, sind selbstverständlich ebenfalls denkbar.

Insgesamt wird durch die vorliegende Erfindung eine zuverlässige und einfach zu bedienende, insbesondere einhändig zu bedienende Fasenhöhenverstellung für eine Kantenfräsmaschine bereitgestellt. Bei beiden Ausführungsformen der Erfindung kann auch eine zweihändige Verstellung erfolgen, bei der der Verstellring mit einer Hand aus seiner Sicherungsposition verlagert wird und mit der anderen Hand durch schnelle Drehung an der Führungsplatte oder den Betätigungselementen der Führungsplatte eine Schnell-Verstellung der Fasenhöhe erreicht wird. Bei einer einhändigen Bedienung kann hingegen insbesondere eine Feineinstellung der Fasenhöhe erfolgen.

## Patentansprüche

1. Kantenfräsmaschine (10; 110) mit einstellbarer Fasenhöhe, umfassend:
ein Lagergehäuse (14, 32; 114, 132),
eine angetriebene Fräseinheit (12; 112), die innerhalb des Lagergehäuses (14, 32; 114, 132) um eine Drehachse D drehbar gelagert ist,
eine Führungsplatte (16; 116) zur Führung der Kantenfräsmaschine an einem zu bearbeitenden Werkstück,
wobei die Führungsplatte (16; 116) axial unterhalb des Lagergehäuses (14, 32; 114, 132) angeordnet und zur Einstellung der Fasenhöhe relativ zu der Fräseinheit (12; 112) axial verstellbar ist, und
eine Verstellvorrichtung (20; 120) zur einhändigen Verstellung der Führungsplatte (16; 116),
wobei die Verstellvorrichtung (20; 120) eine Übersetzungsvorrichtung (22; 122) mit einem Übersetzungselement (24; 124) zur Übersetzung einer Drehbewegung der Führungsplatte (16; 116) um die Drehachse D in eine axiale Translationsbewegung der Führungsplatte (16; 116) umfasst, und
wobei das Übersetzungselement (24; 124) drehfest mit der Führungsplatte (16; 116) verbunden ist,
**dadurch gekennzeichnet, dass** die Verstellvorrichtung (20; 120) ferner umfasst:
eine Betätigungseinheit (26; 126) zur manuellen Betätigung durch den Anwender, welche am Außenumfang der Führungsplatte (16; 116) vorgesehen und dazu ausgebildet ist, eine manuelle Drehbewegung um die Drehachse D in die Führungsplatte (16; 116) einzuleiten, und
einen Sicherungsmechanismus (28; 128) zur Sicherung der Führungsplatte (16; 116) gegen eine unerwünschte Drehbewegung um die Drehachse D.

2. Kantenfräsmaschine (10; 110) nach Anspruch 1,
**dadurch gekennzeichnet, dass** der Sicherungsmechanismus (28; 128) einen Verstellring (30; 130) aufweist, der relativ zu dem Lagergehäuse (14, 32; 114, 132) drehfest und zwischen einer Sicherungsposition und einer Freigabeposition axial verschiebbar angeordnet und dazu ausgebildet ist, in seiner Sicherungsposition eine drehfeste Verbindung mit der Führungsplatte (16; 116) herzustellen.

3. Kantenfräsmaschine (10; 110) nach Anspruch 2,
**dadurch gekennzeichnet, dass** der Sicherungsmechanismus (28; 128) ferner eine Rastanordnung (40; 140) aufweist, die erste Rastelemente (42; 142) umfasst, welche an der Führungsplatte (16; 116) oder an der Betätigungseinheit (26; 126) der Führungsplatte (16; 116) vorgesehen sind, sowie zweite Rastelemente (44; 144), die an dem Verstellring (30; 130) vorgesehen sind, wobei die ersten und zweiten Rastelemente 42, 44; 142, 144) in der Sicherungsposition des Verstellrings (30; 130) derart in Eingriff miteinander stehen, dass eine drehfeste Verbindung der Verstellrings (30; 130) mit der Führungsplatte (16; 116) bewirkt und so eine unerwünschte Drehbewegung der Führungsplatte (16; 116) verhindert wird.

4. Kantenfräsmaschine (10; 110) nach Anspruch 2 oder 3,
**dadurch gekennzeichnet, dass** der Sicherungsmechanismus (28; 128) ferner ein elastisches Element, insbesondere eine Feder (38; 138), umfasst, die derart angeordnet und ausgebildet ist, dass sie den Verstellring (30; 130) in Richtung seiner Sicherungsposition vorzuspannen vermag.

5. Kantenfräsmaschine (10; 110) nach einem der vorherigen Ansprüche,
**dadurch gekennzeichnet, dass** das Lagergehäuse (14, 32; 114, 132) drehfest mit einem dieses teilweise übergreifenden äußeren Gewindering (34; 134) verbunden ist, der ein Innengewinde (36; 136) aufweist, das in Eingriff mit einem Außengewinde (46; 146) des Übersetzungselements (24; 124) steht, so dass eine Drehbewegung des Übersetzungselements (24; 124) um die Drehachse D in eine axiale Translationsbewegung übersetzt werden kann.

6. Kantenfräsmaschine (10; 110) nach Anspruch 5,
**dadurch gekennzeichnet, dass** der äußere Gewindering (34; 134) zumindest abschnittsweise an seinem Außenumfang eine Eingriffsstruktur, insbesondere wenigstens eine Nut (48; 148), aufweist, in welche ein korrespondierende Eingriffsstruktur, insbesondere wenigstens ein Vorsprung (50; 150), der von der Innenumfangsfläche des Verstellrings (30; 130) radial nach innen ragt, derart einzugreifen vermag, dass eine relative Drehbewegung des Verstellrings (30; 130) zum Lagergehäuse (14, 32; 114, 132) unterbunden werden kann.

7. Kantenfräsmaschine (10; 110) nach einem der vorhergehenden Ansprüche, **dadurch gekennzeichnet, dass** die Betätigungseinheit (26; 126) integral mit der Führungsplatte (16; 116) ausgebildet ist und insbesondere eine Profilierung (56; 156) an der Außenumfangsfläche der Führungsplatte (16; 116) umfasst.

8. Kantenfräsmaschine (10; 110) nach einem der vorhergehenden Ansprüche 1 bis 6,
**dadurch gekennzeichnet, dass** die Betätigungseinheit (26; 126) wenigstens ein separat von der Führungsplatte (16; 116) ausgebildetes radial verschiebbares Betätigungselement (52; 152) aufweist, das zwischen einer Drehstellung und einer Blockierstellung radial hin und her bewegt werden kann und insbesondere in jeder Stellung drehfest mit der Führungsplatte (16; 116) verbunden ist.

9. Kantenfräsmaschine (10; 110) nach Anspruch 2 und 8,
**dadurch gekennzeichnet, dass** das Betätigungselement (52; 152) in seiner Blockierstellung in drehfester Verbindung mit dem Verstellring (30; 130) steht.

10. Kantenfräsmaschine (10; 110) nach einem der vorhergehenden Ansprüche 8 und 9,
**dadurch gekennzeichnet, dass** die Betätigungseinheit (26; 126) ferner ein elastisches Element, insbesondere eine Feder, umfasst, die das Betätigungselement (52; 152) in Richtung seiner Blockierstellung vorspannt.
